# EUROPEAN PATENT APPLICATION

(11) **EP 4 672 059 A1**
(43) Date of publication of application: **31.12.2025**
(21) Application number: 25185175.4
(22) Date of filing: 25.06.2025
(51) Int. Cl.: G06F 21/57, G06N 20/00, H04L 9/40

(54) **PATCH COMPLEXITY CLASSIFICATION**

(30) Priority: 26.06.2024 US 202418755268
(71) Applicant: CrowdStrike Inc., Sunnyvale, CA 94086 (US)
(72) Inventor: DREW, Shaefer, Redmond, Oregon (US); RISTIN, Boban, Almere Poort (NL); RAMOS, Pablo, Dublin (IE); BRAUTBAR, Michael, Groton, Massachusetts (US); MCDONALD, Callum, Milton Keynes (GB); CHANG, Yong Nan, Sunnyvale, CA (US)
(74) Representative: Murgitroyd & Company

(57) **Abstract**

The present disclosure provides an approach of collecting vulnerability data corresponding to a vulnerability of a target product. The approach provides the vulnerability data to an artificial intelligence model that is trained to determine a complexity indicator from the vulnerability data. The complexity indicator corresponds to applying a vulnerability patch to remediate the vulnerability. The approach determines a patch complexity classification by providing the complexity indicator to the artificial intelligence model and, in turn, provides the patch complexity classification to a target system corresponding to the target product.

## Description

### TECHNICAL FIELD

Aspects of the present disclosure relate to vulnerability patch prioritization, and more particularly, to classifying the complexity of applying the vulnerability patch.

### BACKGROUND

Cybersecurity threats encompass a wide range of activities and actions that pose risks to the confidentiality, integrity, and availability of computer systems and data. These threats can include malicious activities such as malware, ransomware, and hacking attempts aimed at exploiting vulnerabilities in software or hardware. A software vulnerability refers to a weakness or flaw in a software design or implementation that can be exploited to compromise the software's security and functionality. Vulnerability detection involves the identification of such weaknesses or loopholes that may compromise system security. Vulnerability detection may include testing, code review, employing automated vulnerability scanners, or a combination thereof. When vulnerabilities are detected, typical steps to remediate, or "patch" the vulnerabilities involve risk assessment and vulnerability remediation. Risk assessment may include assessing a vulnerability's potential impact and likelihood of exploitation. Vulnerability remediation involves applying a vulnerability patch (e.g., software patches, version updates, etc.) on affected products (e.g., applications, hardware, operating systems, etc.) to remediate the vulnerability.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system for classifying a complexity of applying a vulnerability patch based on vulnerability data, in accordance with some embodiments of the present disclosure.
FIG. 2 is a block diagram that illustrates an example of an AI model 160 identifying complexity identifiers in response to analyzing vulnerability data.
FIG. 3 is a flow diagram of a method 300 for classifying a complexity of applying a vulnerability patch, in accordance with some embodiments of the present disclosure.
FIG. 4 is a flow diagram of a method 400 for classifying the complexity of applying a vulnerability patch for remediating a vulnerability, in accordance with some embodiments of the present disclosure.
FIG. 5 is a block diagram that illustrates an example system for classifying an patch complexity of a vulnerability patch that remediates a vulnerability, in accordance with some embodiments of the present disclosure.
FIG. 6 is a block diagram of an example computing device that may perform one or more of the operations described herein, in accordance with some embodiments of the present disclosure.

### DETAILED DESCRIPTION

As discussed above, cybersecurity threats encompass a wide range of activities and actions that pose risks to the confidentiality, integrity, and availability of computer systems and data. Over the years, cybersecurity threats have become more prevalent and sophisticated, posing significant challenges to individuals, organizations, and governments worldwide. This escalation can be attributed to several factors, including the exponential growth in the number of internet users, the ever-expanding digital footprint of businesses, and the rapid advancement of technology itself. Cybercriminals have become more adept at exploiting vulnerabilities in increasingly complex information technology (IT) infrastructures, using a variety of tactics such as ransomware, phishing, and advanced persistent threats (APTs) to breach defenses. The proliferation of Internet of Things (IoT) devices has further expanded the attack surface, providing new avenues for unauthorized access and malicious activities. As a result, the need for robust cybersecurity measures has never been more critical, requiring continuous innovation to safeguard against these evolving threats.

Vulnerability prioritization is paramount for maintaining the integrity and security of information systems. Vulnerabilities in cybersecurity are typically prioritized based on a combination of factors that assess their potential impact and the likelihood of exploitation. This process, often supported by frameworks such as the Common Vulnerability Scoring System (CVSS), considers several key elements. These include the severity of the vulnerability, which gauges how much damage could be completed if it were exploited, such as data loss, unauthorized access, or system downtime. The ease of exploitation is also critical, assessing how simple it is for an attacker to leverage the vulnerability, considering the skills needed and the availability of tools. The potential reach of the vulnerability, such as whether it affects a single device or an entire network, is evaluated alongside the presence of known exploits in the wild, which significantly increases the urgency of remediation. Prioritization ensures that resources and efforts are allocated efficiently, addressing the most critical vulnerabilities that pose the highest risk to the organization or system first, thereby reducing the potential for significant harm or breach in cybersecurity defenses.

In addition to prioritizing vulnerabilities based on the above criteria, a challenge found is assessing the complexity of applying a vulnerability patch. Vulnerability patch complexity refers to the degree of difficulty and resource involvement required to perform a vulnerability patch, such as applying a software patch designed to update a computer program or its supporting data. Vulnerability patch complexity can vary widely based on several factors, such as technical challenges, operational impact, resource requirements, manual operations, or a combination thereof. Technical challenges include the intricacies involved in coding changes, systems affected, and the potential for introducing new vulnerabilities or dependencies. Operational impact relates to the extent of disruption that applying the vulnerability patch might cause to ongoing operations, including downtime, the necessity for system restarts, and compatibility with existing IT infrastructure. Resource requirements include the manpower, expertise, and time required to effectively implement the vulnerability patch are also key components of complexity. The complexity level of applying a vulnerability patch influences the overall vulnerability remediation prioritization process. For example, high complexity patches may require extensive testing and phased rollouts, while low-complexity patches may be more straightforward and can be applied more rapidly.

In vulnerability management of prevailing systems, analysts often rely on vendor advisories and publicly available vulnerability databases to gauge the complexity involved in the patching process, such as the Microsoft Security Response Center (MSRC) and the National Vulnerability Database (NVD). MSRC provides details including whether a restart is required, the vulnerability description, steps for patching, areas of mitigation, and answers to frequently asked questions. NVD offers Common Vulnerabilities and Exposures (CVE) statistics. CVEs are publicly disclosed cybersecurity vulnerabilities and exposures. Each vulnerability or exposure in the list is identified with a unique CVE ID number. The goal of CVE is to provide common names for publicly known problems. The use of CVE entries, which include an identification number, a description, and at least one public reference, enables program stakeholders to rapidly discover and correlate vulnerability information used in various products and services. These resources, among others, offer a qualitative sense of the effort required for vulnerability remediation. However, the information provided is often vast, scattered, and varies significantly in detail and format. This inconsistency and fragmentation can make the process of assessing vulnerability patch complexity highly time-consuming and prone to inaccuracies. Analysts are typically tasked with piecing together disparate pieces of information to form a coherent understanding of the remediation effort required. This approach not only strains resources but also increases the risk of oversight and delays in addressing vulnerabilities, potentially leaving systems exposed to threats longer than necessary.

The present disclosure addresses the above-noted and other deficiencies by automated data collection and complexity categorization to classify the effort involved in applying a vulnerability patch. Automated data collection involves capturing publicly available data (e.g., MSRC data and CVE data) and structuring the data into a comprehensive database and schema. The present disclosure then identifies complexity identifiers using quantitative data and qualitative data, such as keywords, product types, text length, action steps count, link counts, etc., to categorize the vulnerability patches.

In some embodiments, the present disclosure uses a processing device to collect vulnerability data corresponding to a vulnerability of a target product. The vulnerability data identifies a vulnerability patch that remediates the vulnerability. The processing device provides the vulnerability data to an artificial intelligence model that is trained to determine complexity indicators from the vulnerability data. The complexity indicators, such as keywords, product types, text length, action steps count, link counts, etc., correspond to applying a vulnerability patch to remediate the vulnerability, etc. The processing device determines a patch complexity classification by providing the complexity indicator to the artificial intelligence model and, in turn, provides the patch complexity classification to a target system corresponding to the target product.

In some embodiments, the vulnerability data identifies the vulnerability patch to remediate the vulnerability and the patch complexity classification indicates a complexity level of applying the vulnerability patch on the target system. In some embodiments, the processing device evaluates whether the complexity indicators indicate at least one of a system restart, a system reboot, or that the target product is a platform product. The processing device then sets the patch complexity classification to a first classification level (e.g., HIGH complexity) in response to determining that the complexity indicators indicate at least one of the system restart, the system reboot, or that the target product is the platform product.

In some embodiments, the processing device sets the patch complexity classification to a second classification level (e.g., MEDIUM complexity) based on determining at least one of: that a number of external links in the vulnerability data exceeds an external link count threshold; that a number of products affected by the vulnerability exceeds a product count threshold; that a number of actions to perform the vulnerability patch exceeds an action count threshold; or that a number of words in the vulnerability data exceeds a word count threshold. In some embodiments, the processing device sets the patch the complexity classification to a third classification level (e.g. LOW complexity) when the complexity indicators do not trigger a HIGH complexity level or a MEDIUM complexity level.

In some embodiments, the processing device evaluates historical patch complexity classifications and determines a historical ratio between an amount of the historical patch complexity classifications that are the first classification level, the second classification level, or the third classification level. The processing device then adjusts, based on the historical ratio, one or more thresholds to impact future patch complexity classifications. In some embodiments, the patch complexity classification enables the target system to prioritize the vulnerability patch and is independent from a complexity to determine the vulnerability.

As discussed herein, the present disclosure provides an approach that improves the operation of a computer system by automating and streamlining the vulnerability patching process. This is achieved through a data-oriented methodology that parses various features from security advisories and vulnerability databases, thereby creating a solution to classify vulnerability patches into distinct complexity ranks (i.e., LOW, MEDIUM, HIGH). In addition, the present disclosure provides an improvement to the technological field of vulnerability management by facilitating a more efficient, accurate, and systematic prioritization and scheduling of patching efforts based on the complexity of the vulnerabilities. The present disclosure not only assists analysts in effectively prioritizing patches, thereby enhancing the security posture of the systems, but also offers a significant reduction in the total patch time. In addition, by enabling batching of patch efforts according to their complexity ranks, the present disclosure effectively optimizes resource allocation and minimizes system downtime, thereby providing a substantial advancement over current manual and fragmented patch management practices.

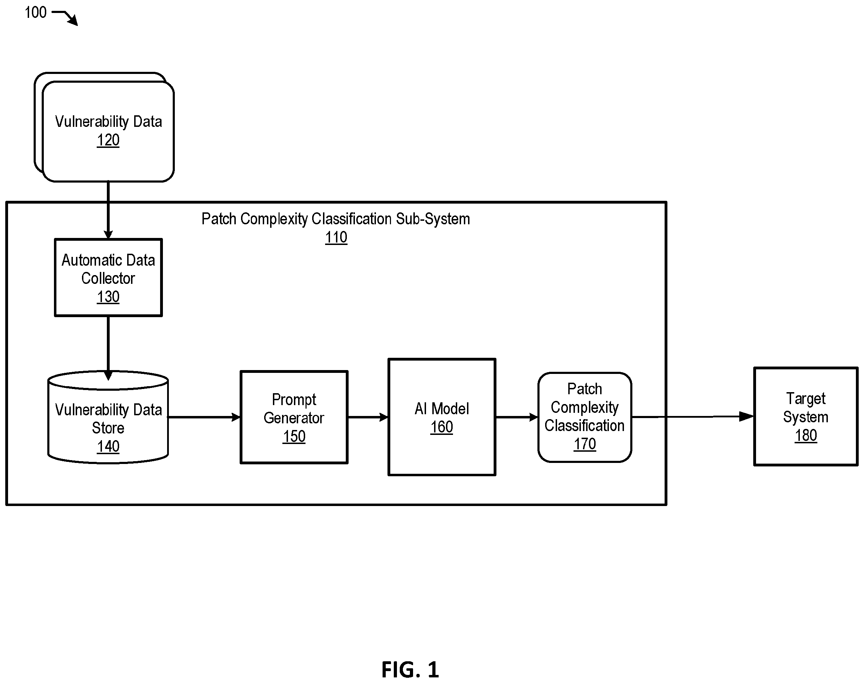

FIG. 1 is a block diagram that illustrates an example system for classifying a complexity of applying a vulnerability patch based on vulnerability data, in accordance with some embodiments of the present disclosure.

System 100 includes patch complexity classification sub-system 110. Patch complexity classification sub-system 110 receives vulnerability data 120 from various sources, such as from vendor advisories and publicly available vulnerability databases (e.g., Microsoft Security Response Center (MSRC), National Vulnerability Database (NVD), etc.). Patch complexity classification sub-system 110 uses automatic data collection 130 to structure vulnerability data 120 into a comprehensive database and schema, which is stored in vulnerability data store 140.

Patch complexity classification sub-system 110 also includes prompt generator 150 and artificial intelligence (AI) model 160. Artificial intelligence is a field of computer science that encompasses the development of systems capable of performing tasks that typically require human intelligence. Machine learning is a branch of artificial intelligence focused on developing algorithms and models that allow computers to learn from data and make predictions or decisions without being explicitly programmed. Machine learning models are the foundational building blocks of machine learning, representing the mathematical and computational frameworks used to extract patterns and insights from data. Large language models, a specialized category within machine learning models, are trained on vast amounts of text data to capture the nuances of language and context. By combining advanced machine learning techniques with enormous datasets, large language models harness data-driven approaches to achieve highly sophisticated language understanding and generation capabilities. As discussed herein, artificial intelligence models (AI model 160) include machine learning models, large language models, and other types of models that are based on neural networks, genetic algorithms, expert systems, Bayesian networks, reinforcement learning, decision trees, or combination thereof.

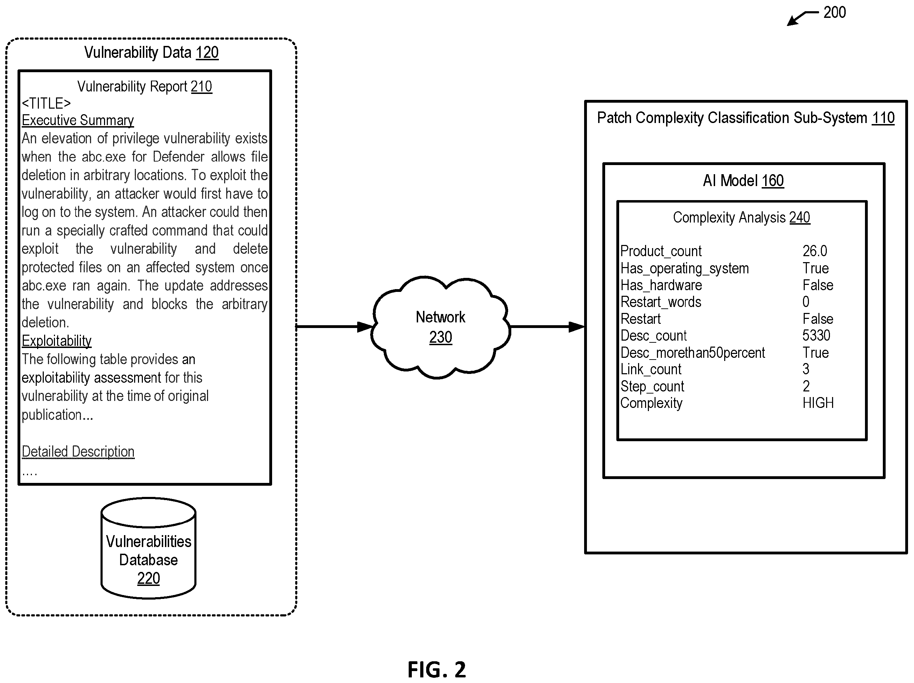

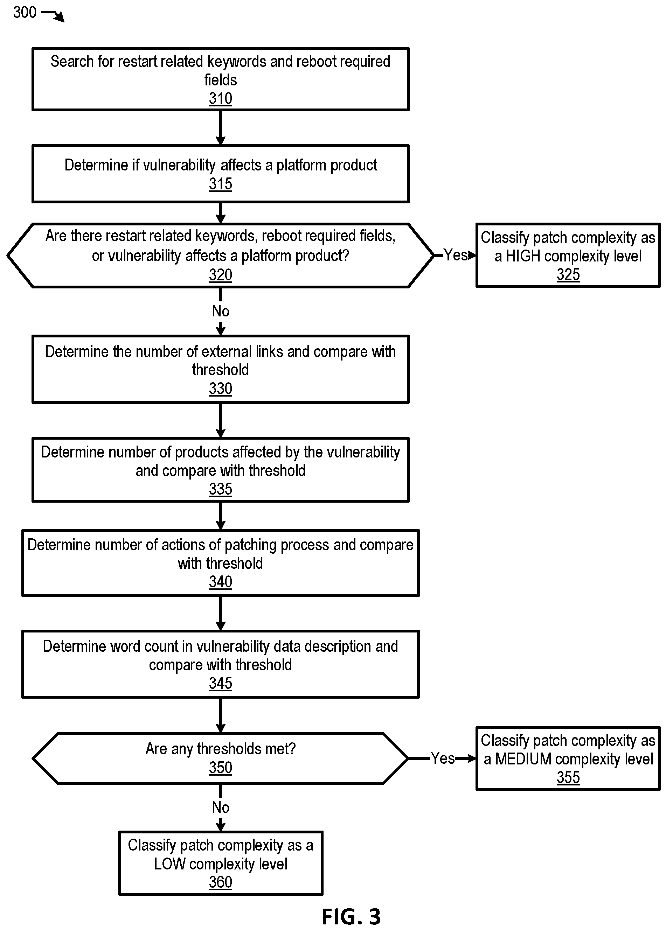

Prompt generator 150 uses the vulnerability data from vulnerability data store 140 to create customized prompts. In one embodiment, prompt generator 150 may be powered by advanced algorithms to perform prompt engineering to elicit the most accurate, relevant, or creative responses by understanding the nuances of language and the capabilities of artificial intelligence AI model 160. AI model 160 utilizes both quantitative and qualitative data analysis techniques to perform complexity classification. AI model 160 processes the vulnerability data and identifies complexity indicators in the vulnerability data, such as, keywords, product types, text length, the number of required user action steps, the number of external links in the documentation, or a combination thereof (see Figs. 2, 3, and corresponding text for further details).

AI model 160 then performs a series of operations to classify the complexity of applying a corresponding vulnerability patch based on the identified complexity indicators. In one embodiment, AI model 160 assesses whether the vulnerability data indicates that a system restart or reboot is required by searching for restart-related keywords within the MSRC description and reboot required fields from the MSRC API. AI model 160 also determines whether the affected product is a platform product (e.g., corresponds to multiple products). If one or more of these conditions are satisfied, AI model 160 classifies the vulnerability patch as HIGH patch complexity.

For a MEDIUM complexity classification, AI model 160 determines whether the vulnerability patch meets at least one of the following criteria: a) the word count of the description exceeds a pre-defined threshold (e.g., 50^{th} percentile); b) the number of external links existing in a description section exceeds a threshold; c) the number of products affected by the vulnerability exceeds a threshold; or d) the number of steps to perform the vulnerability patch exceeds a threshold. AI model 160 classifies the vulnerability patches that do not meet any of these criteria as a LOW patch complexity (see Figure 3 and corresponding text for further details).

In one embodiment, AI model 160 integrates open-source tools, such as integrating a "llama2" large language model with an "Ollama package," both of which may be hosted on a private GPU server. As discussed above, large language models, such as llama2, are built on sophisticated neural network architectures designed to understand and generate human-like text. This capability is particularly useful in complex tasks such as summarizing lengthy technical documents and extracting specific data points. The Ollama package integrates large language models with an API and includes functionalities for model management, prompt generation, format setting, etc., which enhances its ability to extract structured data from unstructured text. The integration enhances the ability to identify complexity indicators and additional context corresponding to the number of steps required to implement a patch, whether the description mentions a vulnerability fix, or the severity of vulnerabilities described in the documentation.

FIG. 2 is a block diagram that illustrates an example of an AI model 160 identifying complexity identifiers in response to analyzing vulnerability data. System 200 shows that vulnerability report 210 and vulnerabilities database 220 provide vulnerability data 120. In one embodiment, vulnerability report 210 may be MSRC vulnerability data and vulnerabilities database 220 may be a National Vulnerabilities Database (NVD). Patch complexity classification sub-system 110 receives vulnerability data over network 230 and generates a prompt to feed into AI model 160.

AI model 160 performs analysis on vulnerability data and produces complexity analysis 240, which AI model 160 uses to generate patch complexity classification 170. In one embodiment, complexity analysis 240 include:
Product_count: Number of products affected (from vulnerability database 220);
Has_operating system: Indicates that the vulnerability affects a platform product (from vulnerability database 220);
Has_hardware: Vulnerability affects a hardware product(from vulnerability database 220);
Restart_words: Indicates whether restart or reboot words are included in vulnerability report 210.
Restart: Set to "True" when MSRC API indicates a restart;
Desc_count: Character count of Detailed Description and Notes (e.g., Executive Summary) in vulnerability report 210;
Desc_morethan50percent: Desc_count is greater than 50% threshold of historical vulnerability reports.
Link_count: Number of external links in vulnerability report 210;
Step_count: Number of identified operations through parsing natural language in vulnerability report 210; and
Complexity: Patch complexity classification level based on above results.

Complexity analysis 240 in Fig. 2 shows that AI model 160 classified the patch complexity level as "HIGH," which is because the vulnerability affects a platform product (Has_operating_system = True). AI model 160 may identify more complexity indicators, less complexity indicators, different complexity indicators, or a combination thereof relative to the complexity indicators shown in Fig. 2.

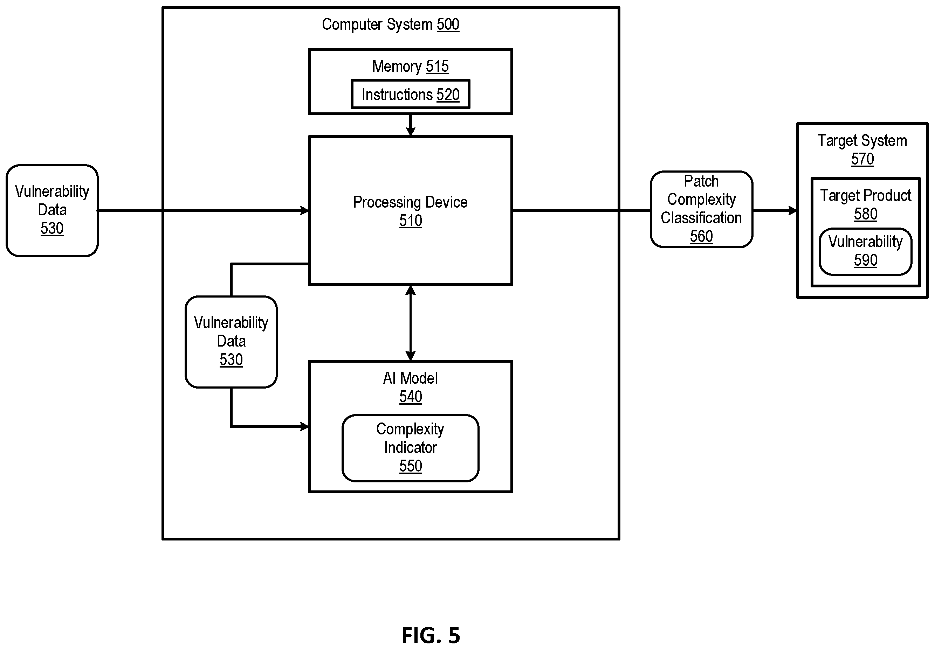

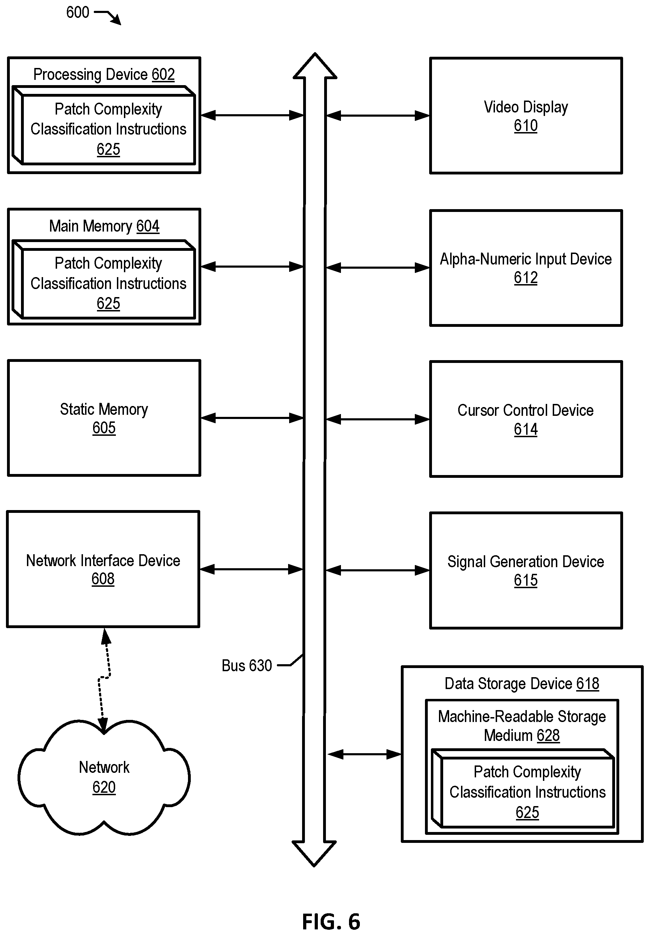

FIG. 3 is a flow diagram of a method 300 for classifying a complexity of applying a vulnerability patch, in accordance with some embodiments of the present disclosure. Method 300 may be performed by processing logic that may include hardware (e.g., a processing device), software (e.g., instructions running/executing on a processing device), firmware (e.g., microcode), or a combination thereof. In some embodiments, at least a portion of method 300 may be performed by AI model 160 (shown in FIG. 1), processing device 510 (shown in FIG. 5), processing device 602 (shown in FIG. 6), or a combination thereof.

With reference to FIG. 3, method 300 illustrates example functions used by various embodiments. Although specific function blocks ("blocks") are disclosed in method 300, such blocks are examples. That is, embodiments are well suited to applying various other blocks or variations of the blocks recited in method 300. It is appreciated that the blocks in method 300 may be performed in an order different than presented, and that not all of the blocks in method 400 may be performed.

With reference to FIG. 3, method 300 begins at block 305, whereupon processing logic searches for complexity indicators in the vulnerability data that includes restart related keywords and reboot required fields. At block 315, processing logic determines if the vulnerability affects a platform product, such as an operating system.

At block 320, when processing logic determines that there are restart related keywords, reboot required fields, whether the vulnerability affects a platform product, or a combination thereof, block 320 branches to block 325, whereupon processing logic classifies the patch complexity as a HIGH complexity level (e.g.., first complexity level). On the other hand, when processing logic determines that restart related keywords, reboot required fields, or the vulnerability does not affect a platform product, block 320 branches to block 330.

At blocks 330-345, processing lock analyzes various complexity indicators in the vulnerability data to determine whether to classify the vulnerability patch as a MEDIUM complexity level or a LOW complexity level (e.g., second complexity level or third complexity level). At block 330, processing logic determines whether external links are included in the vulnerability data and whether the amount of external links exceeds an external link count threshold, such as two external links. At block 335, processing logic determines whether a number of products affected by the vulnerability exceed a product count threshold, such as two products. At block 340, processing and logic determines whether a number of actions (e.g., operations) of the patching process exceeds an action count threshold. At block 345, processing logic determines whether the number of words in the vulnerability data description exceeds a word count threshold.

At block 350, processing logic determines whether any of the threshold in blocks 330 through 345 have been met. If so, processing logic branches to block 355, whereupon processing logic classifies the patch complexity as a MEDIUM complexity level. If none of the thresholds have been met, processing logic branches to block 360 whereupon processing logic classifies the patch complexity as a LOW complexity level. In one embodiment, when processing logic determines that any of the blocks 330 through 345 exceed the threshold, processing logic may stop evaluating the vulnerability data and automatically classify the vulnerability patch as medium complexity period.

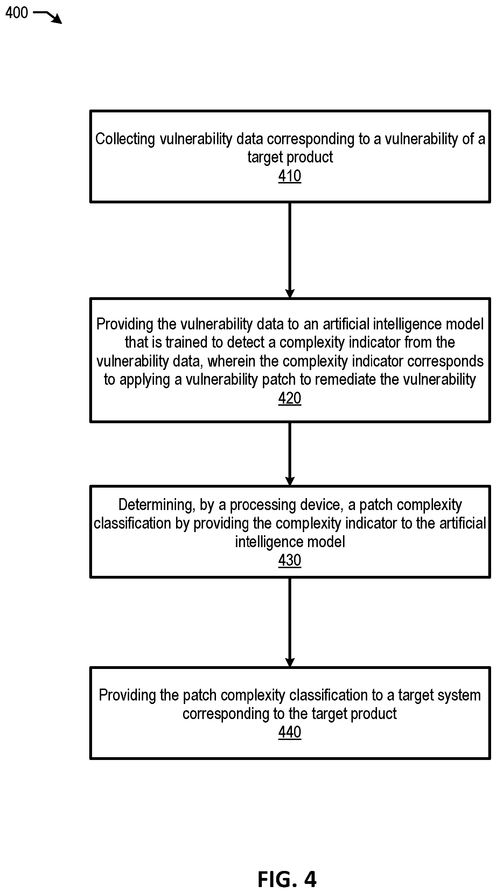

FIG. 4 is a flow diagram of a method 400 for classifying the complexity of applying a vulnerability patch for remediating a vulnerability, in accordance with some embodiments of the present disclosure.

Method 400 may be performed by processing logic that may include hardware (e.g., a processing device), software (e.g., instructions running/executing on a processing device), firmware (e.g., microcode), or a combination thereof. In some embodiments, at least a portion of method 400 may be performed by automatic data collector 130 (shown in FIG. 1), AI model 160 (shown in FIG. 1), processing device 510 (shown in FIG. 5), processing device 602 (shown in FIG. 6), or a combination thereof.

With reference to FIG. 4, method 400 illustrates example functions used by various embodiments. Although specific function blocks ("blocks") are disclosed in method 400, such blocks are examples. That is, embodiments are well suited to applying various other blocks or variations of the blocks recited in method 400. It is appreciated that the blocks in method 400 may be performed in an order different than presented, and that not all of the blocks in method 400 may be performed.

With reference to FIG. 4, method 400 begins at block 410, whereupon processing logic collects vulnerability data corresponding to a vulnerability of a target product. In some embodiments, the vulnerability data identifies a vulnerability patch that remediates the vulnerability.

At block 420, processing logic provides the vulnerability data to AI model 160, which is trained to determine complexity indicators from the vulnerability data. The complexity indicators correspond to applying a vulnerability patch to remediate the vulnerability.

At block 430, processing logic determines a patch complexity classification by providing the complexity indicator to the artificial intelligence model. In some embodiments, the patch complexity classification indicates a complexity level of applying the vulnerability patch on the target system and is independent from a complexity to determine the vulnerability. In some embodiments, the processing logic evaluates whether the complexity indicators indicate at least one of a system restart, a system reboot, or that the target product is a platform product. The processing logic then sets the patch complexity classification to a first classification level (e.g., HIGH complexity) in response to determining that the complexity indicators indicate at least one of the system restart, the system reboot, or that the target product is the platform product.

In some embodiments, the processing logic sets the patch complexity classification to a second classification level (e.g., MEDIUM complexity) based on at least one of: determining that a number of external links in the vulnerability data exceeds an external link count threshold; determining that a number of products affected by the vulnerability exceeds a product count threshold; determining that a number of actions to perform the vulnerability patch exceeds an action count threshold; or determining that a number of words in the vulnerability data exceeds a word count threshold. In some embodiments, the processing logic sets the patch the complexity classification to a third classification level (e.g. LOW complexity) when the complexity indicators do not trigger a HIGH complexity or a MEDIUM complexity.

At block 440, processing logic provides the patch complexity classification to a target system 180 that corresponds to the target product. In some embodiments, the patch complexity classification enables the target system to prioritize the vulnerability patch. In some embodiments, the processing logic evaluates historical patch complexity classifications and determines a historical ratio between an amount of the historical patch complexity classifications that are the first classification level, the second classification level, or the third classification level. The processing logic then adjusts, based on the historical ratio, one or more thresholds to impact future patch complexity classifications.

FIG. 5 is a block diagram that illustrates an example system for classifying an patch complexity of a vulnerability patch that remediates a vulnerability, in accordance with some embodiments of the present disclosure.

Computer system 500 includes processing device 510 and memory 515. Memory 515 stores instructions 520 that are executed by processing device 510. Instructions 520, when executed by processing device 510, cause processing device 510 to collect vulnerability data 530 from for example, publicly available data such as MSRC data and NVD data. Vulnerability data 530 corresponds to a vulnerability 590 of a target product 580.

Processing device 510 provides vulnerability data 530, or provides a prompt based on vulnerability data 530, to AI model 540, which is trained to determine complexity indicators 550 based on the vulnerability data 530 such as keywords, product types, text length, action steps count, link counts, etc. In turn, processing device 510 determines a patch complexity classification by providing the complexity indicator to AI model 540. In one embodiment, AI model 540 produces a patch complexity classification 560 based on the complexity indicators and processing device 510 provides patch complexity classification 560 to a target system 570 corresponding to the target product 580.

FIG. 6 illustrates a diagrammatic representation of a machine in the example form of a computer system 600 within which a set of instructions, for causing the machine to perform any one or more of the methodologies discussed herein for classifying an patch complexity of a vulnerability patch that remediates a vulnerability.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 600 may further include a network interface device 608 which may communicate with a network 620. The computing device 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g*., a mouse) and an acoustic signal generation device 616 (*e.g.,* a speaker). In some embodiments, video display unit 610, alphanumeric input device 612, and cursor control device 614 may be combined into a single component or device (*e.g*., an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute patch complexity classification instructions 625, for applying the operations and steps discussed herein.

The data storage device 618 may include a machine-readable storage medium 628, on which is stored one or more sets of patch complexity classification instructions 625 (e.g., software) embodying any one or more of the methodologies of functions described herein. The patch complexity classification instructions 625 may also reside, completely or at least partially, within the main memory 604 or within the processing device 602 during execution thereof by the computer system 600; the main memory 604 and the processing device 602 also constituting machine-readable storage media. The patch complexity classification instructions 625 may further be transmitted or received over a network 620 via the network interface device 608.

The machine-readable storage medium 628 may also be used to store instructions to perform a method for intelligently scheduling containers, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "collecting," "providing," "evaluating," "setting," "determining," "adjusting," "applying," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for applying the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of applying the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
collecting vulnerability data corresponding to a vulnerability of a target product;
providing the vulnerability data to an artificial intelligence model that is trained to determine a complexity indicator from the vulnerability data, wherein the complexity indicator corresponds to applying a vulnerability patch to remediate the vulnerability;
determining, by a processing device, a patch complexity classification by providing the complexity indicator to the artificial intelligence model; and
providing the patch complexity classification to a target system corresponding to the target product.

2. The method of claim 1, wherein the vulnerability data identifies the vulnerability patch to remediate the vulnerability, and wherein the patch complexity classification indicates a complexity level of applying the vulnerability patch on the target system.

3. The method of claim 1 or 2, wherein the determining the patch complexity classification further comprises:
evaluating whether the complexity indicator identifies at least one of a system restart, a system reboot, or that the target product is a platform product; and
setting the patch complexity classification to a first classification level in response to determining that the complexity indicator identifies at least one of the system restart, the system reboot, or that the target product is the platform product.

4. The method of any preceding claim, wherein the determining the patch complexity classification further comprises:
setting the patch complexity classification to a second classification level based on determining that the complexity indicator indicates at least one of:
a number of external links in the vulnerability data exceeds an external link count threshold;
a number of products affected by the vulnerability exceeds a product count threshold;
a number of actions to perform the vulnerability patch exceeds an action count threshold; or
a number of words in the vulnerability data exceeds a word count threshold.

5. The method of any preceding claim, wherein the patch complexity classification is at least one of a first classification level, a second classification level, or a third classification level, the method further comprising:
evaluating a plurality of historical patch complexity classifications comprising one or more of the first classification level, the second classification level, or the third classification level;
determining a historical ratio between an amount of the historical patch complexity classifications that are the first classification level, the second classification level, or the third classification level; and
adjusting, based on the historical ratio, one or more thresholds to impact future patch complexity classifications.

6. The method of any preceding claim, wherein the patch complexity classification enables the target system to prioritize applying the vulnerability patch.

7. The method of any preceding claim, wherein the patch complexity classification is independent from a complexity level to determine the vulnerability.

8. A system comprising:
a processing device; and
a memory to store instructions that, when executed by the processing device, cause the processing device to:
collect vulnerability data corresponding to a vulnerability of a target product;
provide the vulnerability data to an artificial intelligence model that is trained to determine a complexity indicator from the vulnerability data, wherein the complexity indicator corresponds to applying a vulnerability patch to remediate the vulnerability;
determine a patch complexity classification by providing the complexity indicator to the artificial intelligence model; and
provide the patch complexity classification to a target system corresponding to the target product.

9. The system of claim 8, wherein the vulnerability data identifies the vulnerability patch to remediate the vulnerability, and wherein the patch complexity classification indicates a complexity level of applying the vulnerability patch on the target system.

10. The system of claim 8 or 9, wherein the processing device is further to:
evaluate whether the complexity indicator identifies at least one of a system restart, a system reboot, or that the target product is a platform product; and
set the patch complexity classification to a first classification level in response to determining that the complexity indicator identifies at least one of the system restart, the system reboot, or that the target product is the platform product.

11. The system of any one of claims 8 to 10, wherein the processing device is further to:
set the patch complexity classification to a second classification level based on at least one of:
determine that a number of external links in the vulnerability data exceeds an external link count threshold;
determine that a number of products affected by the vulnerability exceeds a product count threshold;
determine that a number of actions to perform the vulnerability patch exceeds an action count threshold; or
determine that a number of words in the vulnerability data exceeds a word count threshold.

12. The system of any one of claims 8 to 11, wherein the patch complexity classification is at least one of a first classification level, a second classification level, or a third classification level, and wherein the processing device is further to:
evaluate a plurality of historical patch complexity classifications comprising one or more of the first classification level, the second classification level, or the third classification level;
determine a historical ratio between an amount of the historical patch complexity classifications that are the first classification level, the second classification level, or the third classification level; and
adjust, based on the historical ratio, one or more thresholds to impact future patch complexity classifications.

13. The system of any one of claims 8 to 12, wherein the patch complexity classification enables the target system to prioritize applying the vulnerability patch.

14. The system of any one of claims 8 to 13, wherein the patch complexity classification is independent from a complexity level to determine the vulnerability.

15. A computer program which, when executed by a processing device, causes the processing device to carry out the method of any one of claims 1 to 7.
